# FASCICULE DE BREVET EUROPEEN

(11) **EP 0 906 709 B1**
(45) Date de publication et mention de la délivrance du brevet: **29.09.2004**
(21) Numéro de dépôt: 97929366.9
(22) Date de dépôt: 17.06.1997
(51) Int. Cl.: H04Q 7/32

(54) **TERMINAL DE RADIO-TELEPHONIE MOBILE A UTILISATION CONTROLEE**
MOBILES FUNKTELEFONGERÄT MIT KONTROLLIERTER BENUTZUNG
MOBILE RADIOTELEPHONY TERMINAL WITH CONTROLLED UTILISATION

(30) Priorité: 20.06.1996 FR 9607697
(43) Date de publication de la demande: 07.04.1999
(73) Titulaire: SAGEM SA, 75116 Paris (FR)
(72) Inventeur: ALOS, Rafael, 95520 OSNY (FR); DIMECH, Jean-Marc, F-60240 Chaumont en Vexin (FR); PORATO, Marc, F-60240 Loconville (FR); SYKES, Francis, F-75014 Paris (FR)
(74) Mandataire: Bloch, Gérard
(86) Numéro de dépôt international: PCT/FR1997/001089
(87) Numéro de publication internationale: WO 1997/049256

(56) Documents cités:
- EP-A- 0 301 740
- EP-A- 0 448 369
- EP-A- 0 639 486
- DE-C- 4 242 151
- DE-U- 9 217 379
- GB-A- 2 234 883

## Description

Les terminaux de radio-téléphonie mobiles sont des terminaux banalisés équipés d'un lecteur de carte à puce SIM (Module d'Identification du Souscripteur, ou abonné) identifiant l'utilisateur et prouvant le paiement d'un abonnement au réseau radio concerné. La carte à puce constitue ainsi une clé électronique du terminal.

Une telle exploitation du terminal présente cependant des inconvénients.

Tout d'abord, tout abonné ayant subtilisé un terminal pourrait dans certains cas l'utiliser avec sa propre carte SIM. Il est bien prévu de saisir, par un clavier du terminal, un mot de code d'identification de chaque abonné, appelé PIN (Nombre d'Identification Personnel), mais il peut ne contrôler que l'utilisation de la carte SIM associée et être donc sans effet contre une utilisation frauduleuse d'un terminal.

Un autre cas pouvant se présenter est celui d'un prêt du terminal pour une durée, calendaire ou d'utilisation effective, limitée, par exemple aux clients d'un hôtel. Il faut pouvoir empêcher une utilisation de la carte SIM et du terminal au-delà de cette durée.

Certes, EP 0 639 486 enseigne un terminal de radio-téléphonie commandé par une carte SIM comportant un comparateur pour valider un mot de code saisi, par comparaison à un mot en mémoire dans la carte SIM, avant d'activer le terminal. En mode alarme et après activation du terminal, l'alimentation de l'émetteur-récepteur est coupée et elle n'est rétablie que par une alarme pour le lancement d'un appel d'alarme. Tant qu'on est en mode alarme, un tiers ne peut pas lancer d'appel.

EP 0 639 486 ne fournit aucun enseignement pour résoudré le problème du prêt du terminal et l'invention de la présente demande résout ce problème

A cet effet, l'invention concerne un terminal de radio-téléphonie mobile selon la revendication 1.

Ainsi, les deux constituants de l'ensemble terminal-carte avec mot à saisir ne peuvent pas être utilisés séparéement l'un de l'autre. Une carte subtilisée ou périmée ne peut alors être utilisée sur un autre terminal et, inversement, un terminal dérobé ne peut pas être commandé par une carte quelconque.

Dans l'art antérieur, la carte à puce et les moyens de saisie constituaient fonctionnellement un bloc de commande autonome, commandant, sans autre contrôle, les moyens radio.

Selon l'invention, le bloc ci-dessus n'a plus cette autonomie puisque le terminal dispose de moyens d'appariement qui contrôlent l'action de la carte à puce sur les moyens radio. Le terminal est ainsi personnalisé et la carte y est liée.

Dans une forme de réalisation préférée, les moyens d'appariement comportent, entre les moyens de saisie et les moyens de réception de la carte, des moyens de transcodage du mot saisi.

Dans cette forme de réalisation, le contrôle de l'autonomie du bloc de commande intervient par le fait que le mot d'identification indiqué à l'utilisateur est en fait fictif et ne devient réel, c'est-à-dire identique à celui en mémoire, que par l'intermédiaire des moyens de transcodage du terminal. La carte ne peut de ce fait activer les moyens radio d'un terminal que si ce terminal est celui qui effectue le transcodage attendu.

En bref, la carte est asservie au terminal, qui lui-même est asservi à celle-ci.

En particulier, le mot d'identification que porte la carte à puce reste secret vis-à-vis de tout utilisateur, autorisé ou non, puisque le mot PIN que l'utilisateur compose est distinct de celui en mémoire.

Dans une autre forme de réalisation préférée, les moyens d'appariement comportent des moyens mémoires, contenant des données appariées avec des données contenues dans les moyens mémoire de la carte, commandant des moyens comparateurs agencés pour lire les moyens mémoires de la carte et n'autoriser l'activation des moyens radio qu'après vérification dudit appariement.

On effectue ainsi très simplement un contrôle de l'appariement.

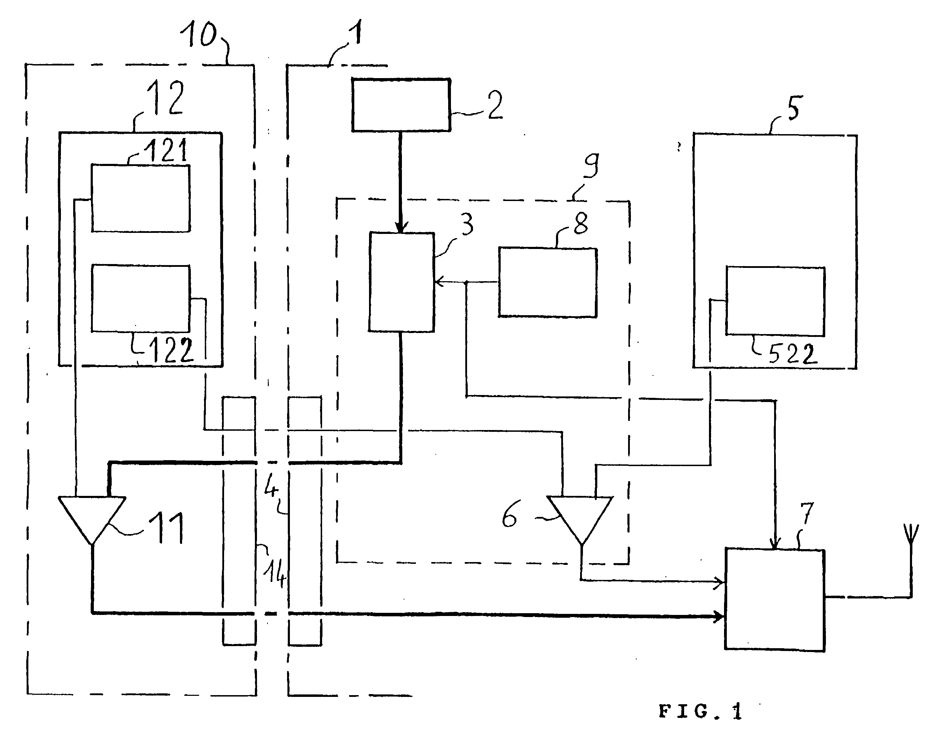

L'invention sera mieux comprise à l'aide de la description suivante d'un exemple intégrant les deux formes de réalisation préférée ci-dessus de l'invention, en référence à la figure unique du dessin annexé qui est un schéma par blocs du terminal de l'invention avec une carte à puce.

Le terminal représenté, référencé 1, est ici un terminal radio, par exemple de téléphonie cellulaire, par exemple GSM, comportant un clavier 2 de saisie de mot d'identification d'utilisateur (et de numérotation) commandant un bloc arithmétique 3 de transcodage, ou chiffrement, relié en sortie à un connecteur/lecteur 4 agencé pour recevoir un connecteur 14 d'une carte à puce 10. Le transcodage du bloc 3 peut ici être déterminé et modifié au clavier par un exploitant du terminal 1, qui prête celui-ci à des utilisateurs successifs. La carte 10 étant représentée séparée du terminal 1, les trois traits en lignes pointillées reliant les connecteurs 4 et 14 indiquent les liaisons qui sont établies lors de la connexion de la carte 10.

La carte 10 comporte un comparateur 11, en fait un microprocesseur, relié, une fois la carte 10 connectée, à une voie d'entrée provenant de la sortie du bloc 3 à travers les connecteurs 4 et 14. Une seconde voie d'entrée du comparateur 11 est reliée à une mémoire 12 de la carte 10 comportant un numéro d'identification d'utilisateur, PIN, référencé 121, ainsi que d'autres données du même genre, telles IMSI (Identité du Souscripteur Mobile Internationale), référencées 122. La sortie du comparateur 11 commande l'activation, à travers les connecteurs 4 et 14, d'un bloc radio émetteur-récepteur 7 du terminal 1. L'activation/désactivation du bloc radio 7 est par ailleurs contrôlée par un comparateur 6 relié en entrée d'une part à la zone 122 (IMSI) de la mémoire 12 de la carte 10 et, d'autre part, à une zone mémoire 522 d'une mémoire 5 du terminal 1, contenant aussi les données IMSI. Les fonctions du bloc 3 et du comparateur 6 sont en pratique exécutées par un microprocesseur 9.

Comme l'invention peut s'appliquer à divers types de terminaux puisqu'elle ne porte pas sur la nature de la fonction du terminal, ici radio, mais sur le contrôle de l'accès à cette fonction, le combiné téléphonique et ses circuits de liaison au bloc radio 7 n'ont pas été représentés.

Le fonctionnement du terminal 1 va maintenant être expliqué.

L'opérateur ayant défini une clé de transcodage ou chiffrement et l'ayant mémorisée dans le bloc de transcodage 3, il détermine alors, à partir du PIN, matériel, qu'il connaît et qui est mémorisé dans la carte 10, un autre PIN, virtuel, qu'il communique à l'utilisateur, que l'on appellera PINUT. Le PINUT est calculé par transformation inverse du PIN.

L'utilisateur, ayant introduit la carte 10 dans le connecteur 4 du terminal associé 1, compose au clavier 2 le PINUT, qui est transcodé dans le bloc 3 en PIN voulu et reconnu par le comparateur 11, qui commande l'activation du bloc radio 7.

Cette commande ne suffit pas en elle-même puisque, dans cet exemple, il est prévu deux moyens d'appariement, qui sont le bloc de transcodage 3 et la mémoire 5 avec le comparateur 6. On comprendra donc que ce qui est ici appelé contrôle par le comparateur 6 pourrait aussi être appelé commande et que, dans d'autres exemples, une seule commande 6 ou 11 suffirait.

Le comparateur 6 contrôle ici la concordance entre les contenus des mémoires 522 et 122 et autorise alors l'activation du bloc radio 7 par le comparateur 11.

Le microprocesseur 9 interdit en outre tout changement du PIN ou d'un éventuel mot de code de contrôle d'accès au terminal 1.

Dans cet exemple, le microprocesseur 9 comporte un compteur 8 d'utilisation ou temporisateur, équivalent d'un dispositif de taxation, qui compte par exemple les durées d'utilisation effective du terminal 1 et qui, par comparaison à une valeur de seuil entrée dans la mémoire 5 par l'opérateur, inhibe le transcodage du bloc 3 pour le rendre transparent. Le numéro saisi au clavier est transmis à la carte 10 sans transformation.

Le terminal ne peut alors fonctionner que de manière classique avec le code PIN de la carte, inaccessible à l'utilisateur. En d'autres termes, l'exploitant prévoit de faire repasser le terminal 1 dans un état de fonctionnement sans appariement lorsque le terminal n'est pas prêté, c'est-à-dire qu'il prévoit de pouvoir utiliser lui-même le terminal par composition du PIN en mémoire dans la carte 10, sans transcodage ni limite de temps.

La sortie de l'état de blocage ci-dessus aboutit donc ici à un état de fonctionnement, banalisé, selon l'art antérieur, qui peut ensuite évoluer vers l'état avec appariement décrit au début. Le passage de l'état de blocage à l'état banalisé intervient par saisie, détectée par le microprocesseur 9, du PIN réel. Le verrouillage du terminal 1 est alors désactivé, c'est-à-dire que le terminal 1 peut fonctionner avec d'autres cartes à puce, le bloc de transcodage 3 étant alors logiquement transparent. De même, la carte à puce 10 peut alors fonctionner avec tout terminal banalisé.

## Revendications

1. Terminal de radio-téléphonie mobile comprenant des moyens radio (7) agencés pour être activés par une carte à puce (10),
- la carte à puce (10) comportant des moyens mémoires (12) contenant un mot d'identification d'abonné (PIN, IMSI) et reliés à une entrée d'un comparateur (11),
- le terminal comportant des moyens (4) de réception de la carte (10), reliés aux moyens radio (7), des moyens (2) de saisie d'un mot d'identification particulier (PIN; PINUT) associé à la carte (10) et agencés pour être reliés à l'autre entrée du comparateur (11), par des moyens (3) de transcodage du mot saisi (PINUT) en le mot d'identification (PIN) mémorisé dans la carte, terminal **caractérisé par le fait qu'**il comporte des moyens (3 ;522,6) pour l'apparier avec la carte (10), agencés pour contrôler l'activation des moyens radio (7) à partir du mot d'identification d'abonné et des moyens de taxation (8) pour inhiber les moyens de transcodage (3) pour que le terminal ne puisse fonctionner que par saisie du mot (PIN) mémorisé dans la carte et non transcodé.

2. Terminal selon la revendication 1, dans lequel les moyens de transcodage comportent un microprocesseur (9).

3. Terminal selon l'une des revendications 1 et 2, dans lequel les moyens d'appariement comportent des moyens mémoires (522), contenant des données appariées avec des donnés (122) contenues dans les moyens mémoire de la carte (10), commandant des moyens comparateurs (6) agencés pour lire les moyens mémoires (12) de la carte (10) et n'autoriser l'activation des moyens radio (7) qu'après vérification dudit appariement.

## Patentansprüche

1. Mobiles Funktelefongerät mit Funkmitteln (7), die eingerichtet sind, um von einer Chipkarte (10) aktiviert zu werden,
- wobei die Chipkarte (10) Speichermittel (12) aufweist, die ein Teilnehmeridentifikationswort (PIN, IMSI) enthalten und mit einem Eingang eines Komparators (11) verbunden sind,
- wobei das Gerät mit den Funkmitteln (7) verbundene Mittel (4) zur Aufnahme der Karte (10) aufweist, Mittel (2) zum Erfassen eines bestimmten der Karte (10) zugeordneten Identifikationswortes (PIN; PINUT), welche eingerichtet sind, um über Mittel (3) zur Umcodierung des erfaßten Wortes (PINUT) in das in der Karte gespeicherte Identifikationswort (PIN) mit dem anderen Eingang des Komparators (11) verbunden zu werden, wobei das Gerät **dadurch gekennzeichnet ist, daß** es Mittel (3; 522, 6) aufweist, um das Gerät und die Karte (10) einander zuzuordnen, die eingerichtet sind, um die Aktivierung der Funkmittel (7) ausgehend von dem Teilnehmeridentifikationswort zu kontrollieren, und Zählmittel (8), um die Umcodierungsmittel (3) derart zu hemmen, daß das Gerät nur bei Erfassung des in der Karte gespeicherten und nicht umcodierten Wortes (PIN) funktionieren kann.

2. Gerät nach Anspruch 1, wobei die Umcodierungsmittel einen Mikroprozessor (9) aufweisen.

3. Gerät nach einem der Ansprüche 1 und 2, wobei die Mittel zum einander Zuordnen Speichermittel (522) aufweisen, die den in den Speichermitteln der Karte (10) enthaltenen Daten (122) zugeordnete Daten enthalten und Komparatormittel (6) steuern, die eingerichtet sind, um die Speichermittel (12) der Karte (10) zu lesen und die Aktivierung der Funkmittel (7) nur nach Verifizierung der Zuordnung zu autorisieren.

## Claims

1. Mobile radiotelephony terminal comprising radio means (7) provided in order to be activated by a smart card (10),
- the smart card (10) comprising memory means (12) containing a subscriber identification word (PIN, IMSI) and connected to one input of a comparator (11),
- the terminal comprising means (4) for receiving the card (10), connected to the radio means (7), means (2) for keying-in a particular identification word (PIN; PINUT) which is associated with the card (10), and said means being provided in order to be connected to the other input of the comparator (11), by means (3) for transcoding the keyed-in word (PINUT) into the identification word (PIN) memorised in the card, the terminal being **characterised in that** it comprises means (3; 522, 6) in order to match it with the card (10), said means being provided in order to control the activation of the radio means (7) from the subscriber identification word, and accounting means (8) in order to inhibit the transcoding means (3) so that the terminal can only function by keying-in the word (PIN) memorised in the card and not transcoded.

2. Terminal according to claim 1, in which the transcoding means comprise a microprocessor (9).

3. Terminal according to one of the claims 1 and 2, in which the matching means comprise memory means (522), containing data matched with data (122) contained in the memory means of the card (10), controlling comparator means (6) provided in order to read the memory means (12) of the card (10) and to authorise the activation of the radio means (7) only after verification of said matching.
